# EUROPEAN PATENT SPECIFICATION

(11) **EP 1 801 725 B1**
(45) Date of publication and mention of the grant of the patent: **23.09.2009**
(21) Application number: 06025969.4
(22) Date of filing: 14.12.2006
(51) Int. Cl.: G06F 21/02

(54) **Chipset security offload engine**
Chipsatzsicherheits-Offload-Engine
Moteur de délestage de sécurité de jeu de puces

(30) Priority: 14.12.2005 US 304116; 14.12.2005 US 304408
(43) Date of publication of application: 27.06.2007
(60) Divisional application: 09153228.3
(73) Proprietor: Nvidia Corporation, Santa Clara, CA 95050 (US)
(72) Inventor: Cox, Michael B., Menlo Park California 94025 (US); Langendorf, Brian Keith, Benicia California 94510-3135 (US); Moreton, Henry Packard, Woodside California 94062 (US); Reed, David G., Saratoga California 95070 (US)
(74) Representative: Dilg, Haeusler, Schindelmann Patentanwaltsgesellschaft mbH

(56) References cited:
- WO-A-98/27685
- WO-A-03/009115
- WO-A-20/05057535
- US-A1- 2003 084 309
- US-A1- 2003 142 818
- US-A1- 2005 076 228

## Description

### FIELD OF THE INVENTION

The present invention is generally related to techniques to provide digital content protection. More particularly, the present invention is related to techniques for offloading aspects of digital content protection from a central processing unit (CPU).

### BACKGROUND OF THE INVENTION

A problem in a number of consumer products is that digital content must be transmitted along signal paths that can be tapped into. As a result, digital content providers are concerned about unauthorized copying of digital content by hackers. For example, a home entertainment system may include a personal computer (PC), graphics sub-system, high-definition television, set-top boxes, digital video recorders and players, and digital versatile disk (DVD) players. Consequently, there is a risk that unencrypted digital content (often known as "clear text" content) may be intercepted by a hacker using, for example, the output of one or more signal buses.

Digital content protection is of increasing importance to protect audio and video content from unauthorized copying. Digital content protection includes, among other things, protocols for encrypting content that will be transmitted over signal buses that can be tapped into. A digital transmission content protection (DTCP) scheme was developed in 1998 by five companies (5C) and is described in the white paper, "5C Digital Transmission Content Protection," published July 1998 by Hitachi, Ltd. Intel Corporation, Matsushita Electric Industrial, Co., Sony Corporation, and Toshiba Corporation, the contents of which are hereby incorporated by reference. Additional details of the DTCP method are described in the "Digital Transmission Content Protection Specification," revision 1.3, published January 2004 by Hitachi, Ltd. Intel Corporation, Matsushita Electric Industrial, Co., Sony Corporation, and Toshiba Corporation, the contents of which are hereby incorporated by reference. The DTCP method may be used with an Institute of Electrical and Electronics Engineers (IEEE) 1394 multimedia bus and includes a protocol for a source device and a sink device (a device that can receive a stream of content) to establish secure transmission of content. The DTCP method includes an authentication and key exchange (AKE) protocol, content encryption, and copy control information (CCI) using an encryption mode indicator (EMI).

One drawback of digital content protection schemes, such as DTCP, is that although content is encrypted on inter-device system buses, clear text data is susceptible to theft at one or more internal data buses. For example, consider DVD playback in a PC based multimedia system. DVD content is received from a DVD player in an encrypted form by a central processing unit (CPU). The CPU decrypts the digital content that it receives. The CPU then re-encrypts the DVD data before writing the data to a display device. However, the decryption and re-encryption performed by the CPU typically necessitates that clear-text data is written to a system memory, where the content is susceptible to theft at a memory bus.

Another drawback of digital content protection schemes is that they impose a significant burden on a CPU performing encryption and decryption of high definition video. For example, the Advanced Encryption Standard (AES) imposes an approximately 16 cycles/Byte (B) encryption cost. Compressed format high definition television (HDTV) corresponds to about 50 MB/s encryption bandwidth such that each high-resolution compressed HDTV content stream corresponds to 800 MHz of the available CPU clock cycles. This is a significant burden on a CPU operating a clock rate of a few Gigahertz. Moreover, in some multimedia systems it is desirable to have the capability to simultaneously handle several video streams such that in the worst case scenario the total encryption/decryption burden on a CPU can consume the majority of CPU clock cycles.

Therefore what is desired is an improved apparatus, system, and method for providing digital content protection.

Document WO 98/27685 discloses an electronic system wherein a chipset operates as an interface (bridge) between a plurality of buses such as the host processor bus, the memory bus, and the system bus. Said chipset also comprises dedicated circuitry for performing bulk cryptographic operations on data transferred via the chipset. In one embodiment, prior to storage in a mass storage device, data in cleartext form are read by the chipset from the system memory, encrypted, and transferred as ciphertext to the mass storage device. The system does not disclose encrypting data within the system memory.

Document WO 2005/057535 discloses a secure video system including Secure Video Graphics (SVG) hardware for protecting specially coded content, such as secure video content data (SVC data), from unauthorized use. The SVG hardware comprises a dedicated cryptographic unit for decrypting SVC data within the hardware. At all other times, SVC data is delivered and stored in encrypted form. The system does not disclose a bridge comprising a security engine for encrypting cleartext data received from the CPU and storing the corresponding ciphertext in system memory.

Document US 2004/0228481 discloses a microprocessor for performing transparent block cryptographic operations. Registers within the microprocessor are used as context pointers for performing context switches among a plurality of cryptographic sessions.

### SUMMARY OF THE INVENTION

This object is solved by the digital content system according to the independent claim. Further refinements of the invention are described in the dependent claims.

A bridge is disclosed for bridging a central processing unit to other components in a system. A security engine in the bridge permits cryptographic services to be offloaded from the central processing unit to the bridge. The security engine encrypts protected data as cipher text at insecure interfaces of the bridge.

### BRIEF DESCRIPTION OF THE FIGURES

The invention is more fully appreciated in connection with the following detailed description taken in conjunction with the accompanying drawings, in which:

FIGURE 1 is a block diagram of digital content protection system having a security engine disposed in a bridge in accordance with one embodiment of the present invention;

FIGURE 2 is a block diagram of a security engine in accordance with one embodiment of the present invention;

FIGURE 3 is a block diagram of a Northbridge implementation in accordance with one embodiment of the present invention;

FIGURE 4 is a block diagram of a Southbridge implementation in accordance with one embodiment of the present invention;

FIGURE 5 illustrates a PCI configuration space in accordance with one embodiment of the present invention;

FIGURE 6 illustrates a context data structure in accordance with one embodiment of the present invention;

FIGURE 7 illustrates an exemplary sequence of operations for digital content protection in accordance with one embodiment of the present invention; and

FIGURE 8 is a block diagram of a digital content protection system for video data in accordance with one embodiment of the present invention;

Like reference numerals refer to corresponding parts throughout the several views of the drawings.

### DETAILED DESCRIPTION OF THE INVENTION

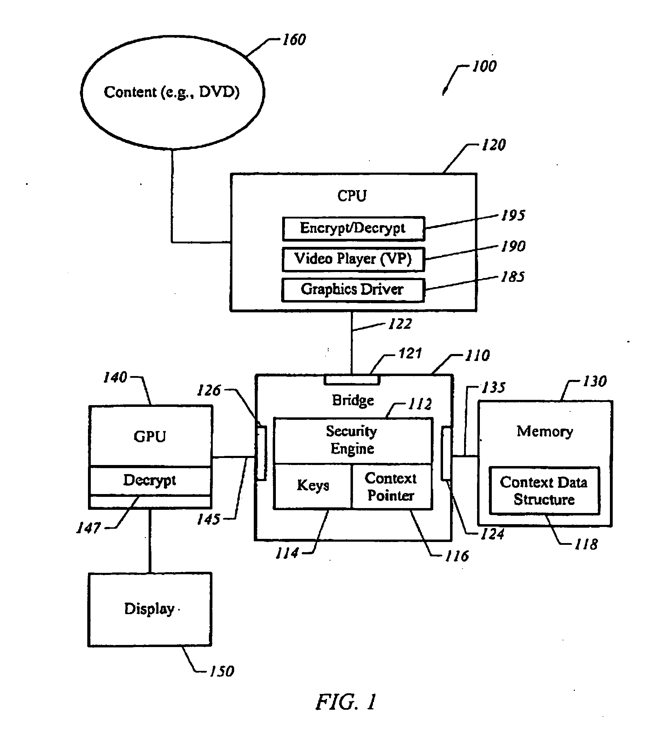

Figure 1 is a block diagram of a digital content system 100 in accordance with one embodiment of the present invention. Digital content system 100 includes a bridge 110 having a security engine 112. In accordance with one embodiment of the present invention, security services, such as the encryption of data for at least one device downstream from CPU 120, are offloaded from CPU 120 to bridge 110 using security engine 112.

Bridge 110 may be implemented as a single chip, as a group of chips, or as a portion of the same chip on which CPU 120 is formed. As described below in more detail, bridge 110 may include any bridge used as part of a chipset to bridge a central processing unit (CPU) 120 to other devices, such as a Northbridge chip, a Southbridge chip, or a combination of a Northbridge and Southbridge chips.

Security engine 112 performs cryptographic services within bridge 110. Exemplary cryptographic services include encryption, decryption, and transcoding (i.e., conversion between different encrypted formats). The cryptographic services may be applied, for example, to data classes which are required to be protected. In some application, all of the data that passes through bridge 110 will require cryptographic services. However, more generally only data requiring protection, such as data requiring digital content protection, may require cryptographic services. The cryptographic services provided by security engine 112 may be utilized to protect data (e.g., digital content, such as video content) along portions of digital content system 100 that are susceptible to hacking.

The cryptographic services can be provided during data access operations, such as data write operations. Encryption/decryption keys 114 are stored in security engine 112 to support the cryptographic services. While a single encryption and/or decryption key may be stored, more generally additional keys may be stored to support more than one type of encryption, decryption, or transcoding. In one embodiment a context pointer 116 points to a source of context data, such as context data 118 within memory 130. Context data 118 includes data structures to permit a context switch to select a specified cryptographic service (e.g., encryption, decryption, or transcoding) to be performed by security engine 112 for particular source/destination addresses. Each context may also indicate a specified encryption/decryption key.

In one embodiment, security engine 112 supports standard encryption and decryption techniques (e.g., Advanced Encryption Standard (AES), Triple Data Encryption Standard (3DES), or public/private key Remote Server Management (RSM)), of compressed or uncompressed data. However, security engine 112 may also be configured to support other encryption protocols. Exemplary transcoding applications include converting from the format of one encryption standard to the format of another encryption standard or to convert between two different encryption keys, such as performing a conversion between AES with a first key to AES with a second key. Security engine 112 is preferably implemented at least in part with dedicated tamper-resistant encryption hardware, which provides benefits in terms of improved security compared to operating encryption/decryption algorithms solely in software. Additionally, implementing security engine 112 with dedicated hardware also permits improvements in performance and power consumption.

Bridge 110 couples a CPU 120, memory 130, and other devices, such as a graphics processing unit (GPU) 140 (illustrated coupled to a display 150). Bridge 110 is coupled to CPU 120 by a bus 122 having a bus interface 121, such as a front side bus (FSB). A bus interface 121 coupling a CPU to a bridge is typically a dedicated high-speed interface that is inherently secure due to soldered connections, embedded circuit paths, and a high data rate that make it difficult to hack into bus 122. Thus, throughout the following discussion it will be understood that clear text data may be transmitted securely from CPU 120 to bridge 110 across bus interface 121 in that it would be extremely difficult for a hacker to intercept data from bus interface 121 in an assembled unit.

In system 100 there are several paths between bridge 110 and other components, such as components 130 and 140, having insecure links. A link is insecure, for example, when a bridge interface 124 or 126 and associated buses 135 or 145 are potentially accessible by a hacker. For example, a memory bus 135 or a bus 145 to GPU 140 may be insecure in that the buses 135 or 145 are not securely soldered and/or have a low enough data rate that hacking into the bus 135 or 145 is feasible.

Input paths include writes of input data into bridge 110 from other devices, such as direct writes from CPU 120 to bridge 110. Output paths include direct writes of output data from bridge 110 to other devices using peer-to-peer techniques such as writes to GPU 140, or to memory 130. Additionally, direct memory access paths include direct writes to memory 130, such as a direct memory access in which CPU 110 writes to memory 130. Bridge 110 may utilize any interface capable of writing data from one device to another device and which is capable of direct memory accesses. In one embodiment, bridge 110 is adapted to utilize a peripheral component interface express (PCI-E) as a high-speed interface with at least one other device, such as GPU 140. PCI-E is a high speed interface standard described in the "PCIe Base Specification" published by the Peripheral Component Interface-Special Interest Group (PCI-SIG), the contents of which are hereby incorporated by reference. However, more generally other industry standard interfaces, such as the peripheral component interface (PCI), may also be used instead of PCI-E couple CPU 110 to bridge 110.

In one embodiment security engine 112 is a PCI device that may, for example, be implemented on PCI bus 0 to permit security engine 112 to be authenticated and certified at the time of motherboard manufacture. In the PCI architecture there are different bus numbers corresponding to a primary bus number, secondary bus number, and subordinate bus number. PCI bus 0 is by definition that bus to which the Host Bridge connects, where the Host Bridge connect the CPU to the PCI System. A privileged write may be used to load encryption/decryption keys into security engine 112.

Figure 1 illustrates an exemplary application 185 for running a Video Player (VP) application 190 and a graphics driver 185 in CPU 120. Encrypted digital content is received from a digital content source 160, such as DVD player (for the purposes of illustration digital content source player 160 is shown directly attached to CPU 120 although more accurately it would be connected to an input device port). In accordance with a digital content protection protocol, CPU 120 includes encryption/decryption software 195 and reads encrypted digital content from digital content source 160 and performs any initial decryption of encrypted content using encryption/decryption software 195. VP application 190 performs operations for managing the playback and/or storage of one or more video streams.

GPU 140 receives commands from CPU 120 for generating video frames and also receives video data, typically from memory 130. One aspect of GPU 140 is that video processing operations may be offloaded to GPU 140 to reduce CPU utilization. However, another aspect of GPU 140 is that it may generate video frames having improved display attributes. Video content may, for example, be created in an original format that is not optimized for displaying on a personal computer or a high definition television. As an illustrative example, the Nvidia Pure Video Decoder, sold by the Nvidia corporation of Santa Clara, California, works with GeForce 6 and 7 series GPUs. The GeForce 6 and 7 series GPUs include a programmable video processor, an MPEG-2 decoding engine, and a motion estimation engine. The Nvidia Pure Video Decoder utilizes hardware acceleration to perform filtering, scaling, format conversion, and other operations to accelerate video playback. Additionally, a variety of operations may be utilized to improve the display of video content on desktop personal computers, notebook personal computers (PCs), and high-definition televisions (HDTVs) with a reduction in visual artifacts, including sub-pixel calculations to reduce aliasing effects. It will thus be understood throughout the following discussion that in one embodiment GPU 140 supports one or more features to improve video playback and reduce CPU utilization, such as programmable video processing, MPEG-2 decoding, de-interlacing, inverse telecine, filtering, scaling, format conversion, and motion estimation.

CPU 120 may be based on any suitable microprocessor. As one example, CPU 120 may be a microprocessor supporting a virtual machine implementation. A virtual machine implementation permits a microprocessor CPU to be logically divided into separate partitions dedicated to performing different functions. In digital content applications this permits, for example, a partition to be dedicated to servicing digital content. As an illustrative example, one partition in a virtual machine may be dedicated to video player software. In a virtual machine implementation, the video player partition is isolated from all other partitions so that no other software may read or modify the video player's data. Virtual machine support provides improved security against software attacks, while security engine 112 provides improved security against hardware attacks. As one example of a CPU designed to operate as a virtual machine, Intel has developed a 64 bit Pentium microprocessor with integrated security features designed to support the codenamed "Longhorn" version of the Windows® operating system of the Microsoft Corporation of Redmond, Washington.

In accordance with conventional content protection schemes, a command stream sent to GPU 140 on bus 145 needs to be encrypted, and is then decrypted in GPU 140 using a GPU decryption engine 147. Conventionally, CPU 120 would also have to perform the function of re-encrypting digital content sent to bridge 110 so that the output on bus 145 is encrypted. However, in accordance with the present invention, bridge 110 performs any necessary re-encryption of data. Thus, the re-encryption function is offloaded from CPU 120, improving CPU performance. Moreover, security engine 112 can include dedicated hardware that reduces the power consumption required for encryption/decryption compared with a software-based encryption/decryption within CPU 195. Additionally, in one embodiment bridge 110 encrypts data transmitted across memory bus 135 for storage in memory 130, improving security.

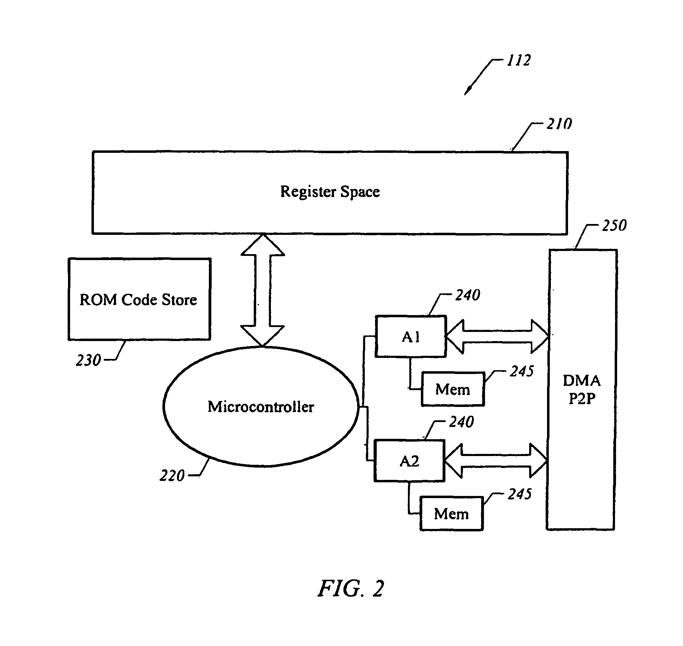

Figure 2 illustrates an exemplary implementation of security engine 112. In one embodiment security engine 112 includes a register space 210, microcontroller 220, and read only memory (ROM) code store 230. Each supported encryption algorithm may include dedicated tamper resistant cryptographic hardware modules 240 (commonly known as "encryption hardware") for executing an encryption/decryption algorithm and associated on chip memory buffers 245. A communication module 250 supports direct memory accesses (DMA) and peer-to-peer (P2P) communication with other components of system 100.

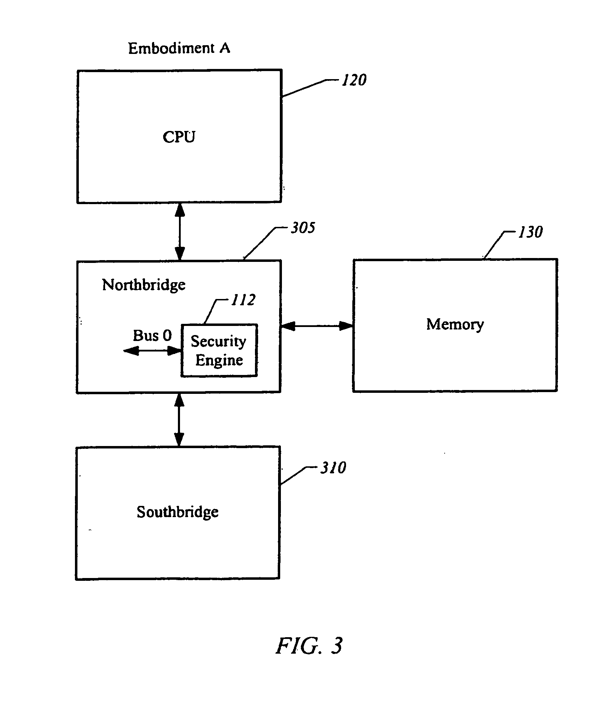

Figure 3 illustrates a Northbridge architecture. In this embodiment, security engine 112 is disposed in a Northbridge chip 305. A conventional Southbridge chip 310 is coupled to Northbridge chip 305.

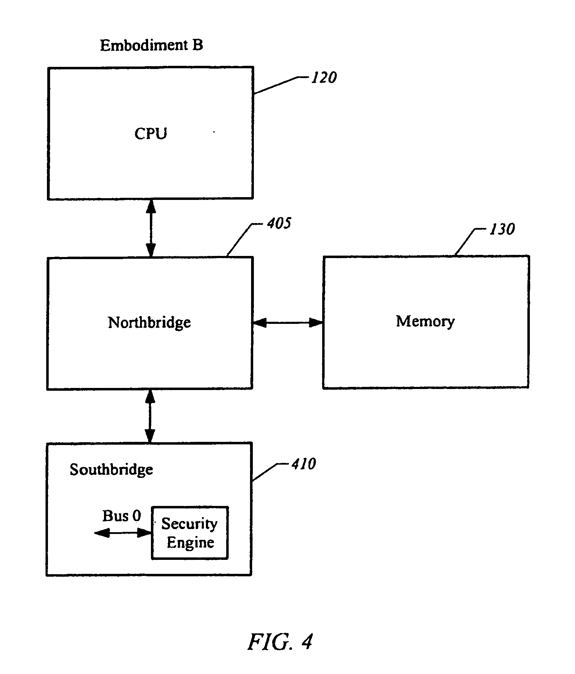

Figure 4 illustrates a Southbridge architecture. In this embodiment security engine 112 is disposed within a Southbridge chip 410. Southbridge chip 410 may be coupled to a Northbridge chip 405. However, some microprocessor CPUs, such as the AMD K8 processor, have an integrated Northbridge functionality such that it will be understood that Southbridge chip 410 may be connected directly to a CPU 120.

As previously described, in one embodiment security engine 112 is designed to work in a PCI architecture environment (e.g., a PCI-Express environment, such as that described in the PCI-E specification or the PCI 2.2 specification, which are both published by PCI-SIG, the contents of each of which are hereby incorporated by reference). The PCI architecture supports CPU and device read and write transactions to memory, as well as reads and writes to devices via special configuration, I/O, and memory-mapped I/O (MMIO) transactions. Each PCI-compliant device supports a "configuration space" that allows the device to be discovered, queried, and configured. Each "configuration space" may optionally support address regions by which the CPU and other devices may read and write to the device. These regions are defined by "Base Address Registers" (BARs).

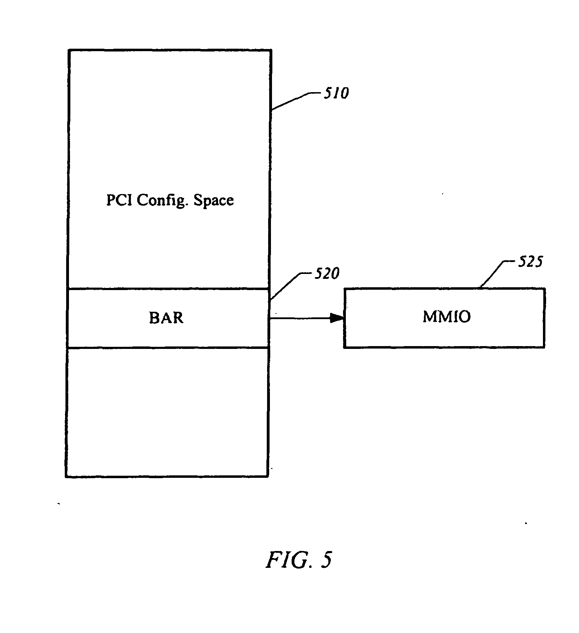

Figure 5 illustrates a PCI configuration space 510 having a Base Address Register 520 that permits access to a memory-mapped address range via memory-mapped reads and writes from the CPU or other device. Device control and data structures can be embedded in the address regions pointed to by BAR's. For example, the control and data structures described below can be embedded in one or more address regions pointed to by a BAR in one embodiment of security engine 112.

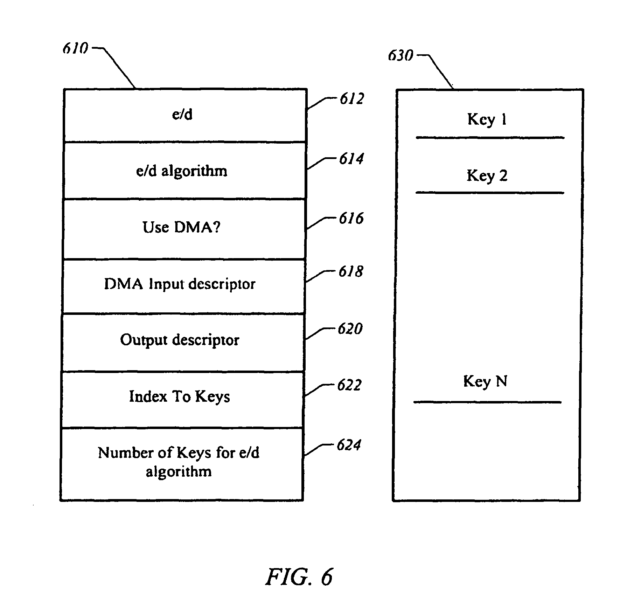

Figure 6 illustrates an exemplary context data structure 610 for implementing a context switch. In one embodiment, security engine 112 is capable of supporting an integer number, M, of simultaneous sessions corresponding to M instances of context data structure 610. An array of keys 630 permits different encryption, decryption, or transcoding algorithms requiring different keys (or more than one key) to be utilized. In one embodiment an integer number, N, of keys is supported by the array of keys 630. A context is selected based on source address, destination address, and memory attributes (e.g., a direct memory access). An exemplary context data structure 610 includes context information e/d field 612 defining whether encryption or decryption is to be performed, e/d algorithm field 614 defining the encryption/decryption algorithm to be used, a field defining whether DMA is used 616, a DMA input descriptor field 618 defining the parameters required by the device for DMA from memory, an output descriptor field 620 defining the parameters required for output from the device, an index field 622 which identifies the first key in the array of keys 630, and a number field 624 indicating the number of keys to be used by the encryption / decryption algorithm.

The exemplary context data structure 610 may also be expressed as pseudocode. In one embodiment the security engine supports an integer number, M, of contexts, and an integer number, N, of on-chip keys. Each context may use a variable number of keys. Each context in addition has requisite information to be able to read input data (or have input data written to it), and requisite information to be able to write output data. A DMA address descriptor table or other descriptor may be included to support DMA accesses. An index to a current context is provided, which enables fast context switch (to change context, change the current index). An offset from the Base Address Register is provided to allow the security engine 112 to be implemented as one of several functions in a single PCI device. In pseudo-code, these data structures are mapped into one or more security engine BAR's as follows:
integer N
integer M
index current context
Offset_from_base_address MMIO_input
Key keys[N]

An exemplary context data structure is as follows:

```
 struct{
         Boolean    encrypt_not_decrypt;
         Enumerated encryption_decryption_algorithm;
         Boolean    use_dma
         DMA_input    dma_input
         Output    output
         index    start_key (index into keys)
         integer    number_of_keys
 (number of keys must be consistent with encryption_decryption_algorithm)
  } Contexts[M]
```

and where

```
  struct DMA_input {
         Address    data_descriptor_table
         integer    length
  }
  struct Output {
         Address    addr
         integer    limit
  }
```

The present invention permits several different input modes in which security engine 112 can be used to encrypt, decrypt or transcode. The input to security engine 112 can be direct writes from the CPU, direct writes from another device, or an input made via a direct memory access. As one example, memory mapped writes to the device can be made by the CPU or by another device via peer-to-peer transactions. As one example, the CPU can write clear text into security engine 112. The security engine then encrypts and writes cipher text to a destination. As another example, a CPU or other device can write cipher text to the security engine 112. In this case, the security engine 112 decrypts the cipher text and writes clear text output to a destination. For the case of a direct memory access input, a direct memory access is used to read content data from memory that is written by the CPU or another device. For the case that the direct memory access is to clear text data, security engine 112 performs encryption and writing of cipher text. For the case that the direct memory access is to clear text data, security engine 112 decrypts and writes clear-text data.

The output can be to physical memory or to another device using peer-to-peer. In one embodiment the output is determined by a programmable address. For example, the programmable address can be an output address range in physical memory or in the memory space of another device.

Input modes include MMIO writes by the CPU 120 or other devices using peer-to-peer writes. Output modes include direct memory access to memory and peer-to-peer. In one embodiment CPU 120 may directly write clear text data to the encryption engine 112. Encryption engine may write encrypted data to memory 130, eliminating the need to store clear text data in memory 130.

Exemplary applications of the present invention include applications in encrypting and decrypting video for playback; encrypting and decrypting between different standards (i.e., transcoding) for storage applications, such as network storage; encrypting; decrypting, or transcoding network traffic; and applications for encrypting and decrypting content in personal video recorder systems.

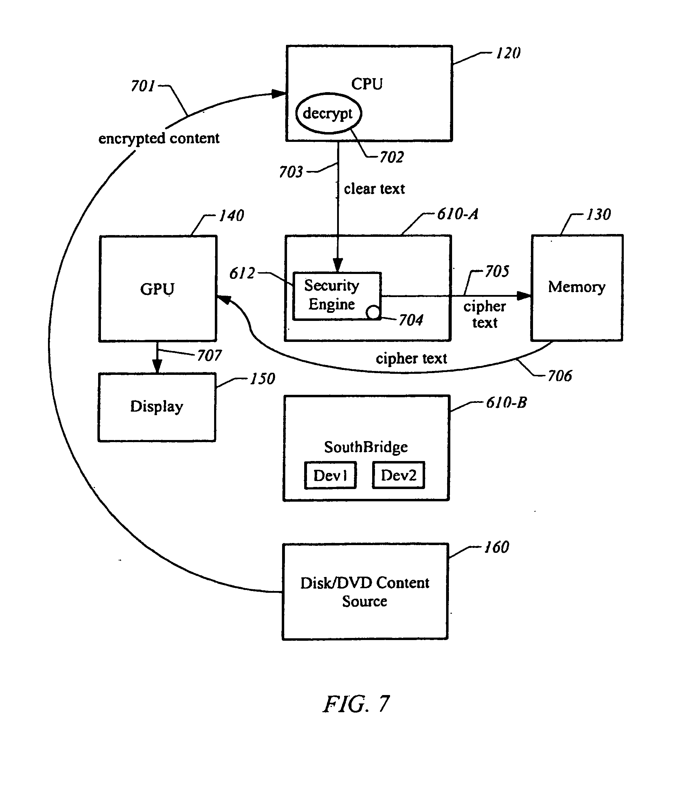

Figure 7 illustrates an exemplary sequence of operations for securely displaying video. As an illustrative example, bridge 110 is illustrated as a Northbridge chip 610-A and a Southbridge chip 610-B. The buses between components are omitted for illustrative purposes to simplify the drawing. As indicated by arrow 701, CPU 120 reads video data from a video content source 160. In accordance with content protection protocols, the content is encrypted. CPU 120 performs decryption 702 within CPU 120 using software decryption techniques. Clear text data is sent 703 by CPU 120 to the security engine 112. Since a front side bus is difficult to tap, the transmission of clear text data from CPU 120 to security engine 112 is inherently secure. The security engine 112 encrypts the data 704. The security engine 112 then uses a direct memory access to write 705 cipher text to memory 130. As a result, any content transmitted over a memory bus (not shown) is secure. GPU 140 then uses a direct memory access to read 706 cipher text. GPU 140 then decrypts and displays 707 the content.

Referring to Figure 7, one benefit provided by the present invention is that content can be transmitted and stored as cipher text in portions of the system susceptible to hacking. Thus, digital content protection is improved. Additionally, the CPU overhead associated with encrypting content is reduced, improving CPU performance. Additionally, security engine 112 is preferably designed to be more power efficient than CPU 120 at performing encryption and decryption operations. As result, offloading of encryption/decryption operations to security engine 112 can reduce power consumption.

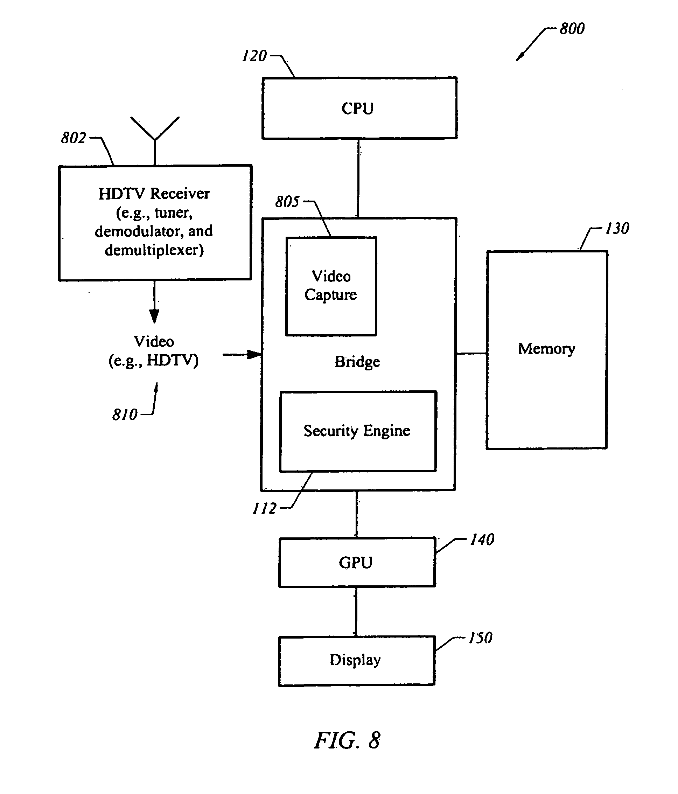

Another application of the present invention is in Personal Video Recorder (PVR) applications. PVRs record television signals, such as HDTV signals. Figure 8 illustrates an exemplary PVR system 800 for digital television (DTV). PVR system 800 may, for example, be a media center personal computer having a CPU 120, GPU 140, display 150, memory 130, and at least one bridge, such as bridge 110. A video capture (VC) module 805 in include in PVR system 800 and may, for example, be included in bridge 110. VC module 805 capture broadcast signals 810 for storage. An HDTV receiver 802 may be coupled to PVR system 800 to receive broadcast signals. HDTV receiver 802 may, for example, perform demodulation and decoding to generate video signals 810 in the form of a transport stream of demodulated data packets. The video signals 810 may be received directly by bridge 110 or be coupled into bridge 110 from another component, depending upon the implementation.

It has been proposed that future television receivers be required to recognize a broadcast flag and in response to detecting a broadcast flag implement a digital content protection scheme to protect the captured video from being distributed via the Internet or other mass methods. As a result, any copies of broadcast HDTV signals that are received are kept in a protected format such that it is difficult for an end-user to distribute unprotected copies of video content. The broadcast flag, may for example, be included in the headers of Advanced Television Systems Committee (ATSC) video packets in accordance with the Program and System Information Protocol (PSIP). In one embodiment of the present invention, PVR system 800 detects whether a broadcast flag is present in video signals 810. If a broadcast flag is present, encryption/decryption services required to support digital content protection are offloaded to security engine 112. For the case of a PVR application, many of the processes are identical to that described in Figure 7 except that the source of data is broadcast signals and the presence of a broadcast flag is monitored. For example, PVR system 800 may encrypt copies of received video signals for storage in memory 130 for later playback and perform decryption required for subsequent playback.

As previously described, the context state is stored in memory to support the use of multiple contexts. In a virtual machine implementation (e.g., Longhorn), the partitions provide a high degree of protection from software attacks, as previously described. However in a system that does not have partitions for providing container isolation, such as a system running Linux or WinXp, it may be desirable to provide additional protection of context information stored in memory to increase security. In one embodiment a key is stored in the hardware of security engine 112 to encrypt/decrypt the context state that is stored in memory. This permits the context state to be stored in memory as cipher text, thereby improving security compared with storing context state information in memory as clear text.

An embodiment of the present invention relates to a computer storage product with a computer-readable medium having computer code thereon for performing various computer-implemented operations. The media and computer code may be those specially designed and constructed for the purposes of the present invention, or they may be of the kind well known and available to those having skill in the computer software arts. Examples of computer-readable media include, but are not limited to: magnetic media such as hard disks, floppy disks, and magnetic tape; optical media such as CD-ROMs and holographic devices; magneto-optical media such as optical disks; and hardware devices that are specially configured to store and execute program code, such as application-specific integrated circuits ("ASICs"), programmable logic devices ("PLDs") and ROM and RAM devices. Examples of computer code include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hardwired circuitry in place of, or in combination with, machine-executable software instructions.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims define the scope of the invention.

## Claims

1. A digital content system (100) with improved digital content protection, comprising:
a digital content source (160) adapted to send encrypted digital content to a CPU (120);
a central processing unit (CPU) (120) adapted to receive the encrypted digital content from the digital content source (160), the CPU (120) adapted to generate clear text digital data corresponding to the digital content received therein;
a bridge (110) coupled to said CPU (120) by a secure link (122), said bridge (110) adapted to receive said clear text digital data corresponding to the digital content;
a system memory (130) coupled to said bridge (110) by a first insecure link (135);
a graphics processing unit (GPU) (140) including a decryption engine (147), the GPU (140) coupled to said bridge (110) by a second insecure link (145);
a display (150) coupled to the GPU (140); and
a security engine (112) disposed in said bridge (110), said security engine (112) adapted to provide cryptographic services such that said clear text digital data is encrypted by said security engine (112) and transferred via said first insecure link (135) to the system memory (130),
wherein said bridge (110) is adapted to encrypt commands received from said CPU (120) and provide encrypted commands to a graphics processing unit (140) coupled to said bridge (110).

2. The digital content system of claim 1, wherein said bridge (110) is adapted to receive video signals and perform cryptographic services to provide content protection for video capture of said video signals.

3. The digital content system of claim 1, wherein said cryptographic services include at least one of encryption, decryption, and transcoding.

4. The digital content system of claim 1, wherein said bridge (110) is adapted to receive a cipher text input, perform decryption an said cipher text input, and write clear text output to a destination.

5. The digital content system of claim 1, wherein said bridge (110) is adapted to receive a clear text input, perform encryption of said clear text input, and write cipher text output to a destination.

6. The digital content system of claim 1, wherein said bridge (110) is adapted to receive a cipher text input in a first cipher format, perform transcoding, and write said cipher text output in a second cipher format to a destination.

7. The digital content system of claim 1, wherein: said bridge (110) is adapted to provide said cipher text to a graphics processing unit (GPU) (140) coupled to said bridge (110).

## Patentansprüche

1. Ein Digitalinhaltssystem (100) mit verbessertem Digitalinhaltsschutz, aufweisend:
eine Digitalinhaltsquelle (160) geeignet zum Senden von verschlüsseltem digitalen Inhalt an eine CPU (120);
eine zentrale Verarbeitungseinheit (CPU) (120) geeignet zum Empfangen des verschlüsselten digitalen Inhalts von der Digitalinhaltsquelle (160), wobei die CPU (120) zum Erzeugen von Digitalklartextdaten geeignet ist, die dem darin empfangenen digitalen Inhalt entsprechen;
eine Bridge (110), gekoppelt zu der CPU (120) über einen sicheren Link (122),
wobei die Bridge (110) zum Empfangen der digitalen Klartextdaten, die dem digitalen Inhalt entsprechen, geeignet ist;
einen Systemspeicher (130), der zu Bridge (110) über einen ersten unsicheren Link (135) gekoppelt ist;
eine Grafikverarbeitungseinheit (GPU) (140) aufweisend eine Dekodierungsfunktionseinheit (147), wobei die GPU (140) zu der Bridge (110) über einen zweiten unsicheren Link (145) gekoppelt ist;
eine Anzeigeeinheit (150) gekoppelt zu der GPU (140); und
eine Sicherheitsfunktionseinheit (112) angeordnet in der Bridge (110), wobei die Sicherheitsfunktionseinheit (112) zum Bereitstellen von kryptografischen Diensten geeignet ist, so dass die Digitalklartextdaten durch die Sicherheitsfunktionseinheit (112) verschlüsselt werden und über den ersten unsicheren Link (135) zu dem Systemspeicher (130) übertragen werden,
wobei die Bridge (110) zum Verschlüsseln von von der CPU (120) empfangenen Befehlen und Bereitstellen von verschlüsselten Befehlen an eine Grafikverarbeitungseinheit (140) gekoppelt zu der Bridge (110) geeignet ist.

2. Das Digitalinhaltssystem nach Anspruch 1, wobei die Bridge (110) zum Empfangen von Videosignalen und Durchführen von kryptografischen Diensten geeignet ist, um einen Inhaltsschutz zur Videoerfassung der Videosignale bereitzustellen.

3. Das Digitalinhaltssystem nach Anspruch 1, wobei die kryptografischen Dienste zumindest eines von Verschlüsselung, Entschlüsselung und Umschlüsselung aufweisen.

4. Das Digitalinhaltssystem nach Anspruch 1, wobei die Bridge (110) zum Empfangen einer Chiffrierungstexteingabe, Durchführen einer Entschlüsselung einer Chiffrierungstexteingabe und Schreiben einer Klartextausgabe an ein Ziel geeignet ist.

5. Das Digitalinhaltssystem nach Anspruch 1, wobei die Bridge (110) zum Empfangen einer Klartexteingabe, Durchführen einer Verschlüsselung der Klartexteingabe und Schreiben einer Chiffrierungstextausgabe an ein Ziel geeignet ist.

6. Das Digitalinhaltssystem nach Anspruch 1, wobei die Bridge (110) zum Empfangen einer Chiffrierungstexteingabe in einem ersten Chiffrierungsformat, Durchführen einer Umschlüsselung und Schreiben der Chiffrierungstextausgabe in einem zweiten Chiffrierungsformat an ein Ziel geeignet ist.

7. Das Digitalinhaltssystem nach Anspruch 1, wobei die Bridge (110) zum Bereitstellen des Chiffrierungstextes an eine Grafikverarbeitungseinheit (GPU) (140) gekoppelt zu der Bridge (110) geeignet ist.

## Revendications

1. Un système (100) à contenu numérique avec une protection améliorée de contenu numérique, comprenant :
- une source (160) de contenu numérique adaptée pour envoyer un contenu numérique encrypté à une CPU (120) ;
- une unité centrale de traitement (CPU) (120) adaptée pour recevoir le contenu numérique encrypté provenant de la source (160) de contenu numérique, la CPU (120) étant adaptée pour générer des données numériques de texte en clair correspondant au contenu numérique reçu ;
- un pont (110) couplé à ladite CPU (120) par une liaison sécurisée (122), ledit pont (110) étant adapté pour recevoir lesdites données numériques de texte en clair correspondant au contenu numérique ;
- une mémoire de système (130) couplée audit pont (110) par une première liaison non sécurisée (135) ;
- une unité de traitement graphique (GPU) (140) comprenant un module de décryptage (147), le GPU (140) étant couplé audit pont (10) par une seconde liaison non sécurisée (145) ;
- un écran (150) couplé à la GPU (140) ; et
- un module de sécurité (112) disposé dans ledit pont (110), ledit module de sécurité (112) étant adapté pour délivrer des services cryptographiques de sorte que lesdites données numériques de texte en clair sont encryptées par ledit module de sécurité (112) et transférées par ladite première liaison non sécurisée (135) à la mémoire de système (130) ;
dans lequel ledit pont (110) est adapté pour encrypter des commandes reçues de ladite CPU (120) et pour fournir des commandes encryptées à une unité de traitement graphique (140) couplée audit pont (110).

2. Le système à contenu numérique selon la revendication 1, dans lequel ledit pont (110) est adapté pour recevoir des signaux vidéo et réaliser des services cryptographiques pour délivrer une protection de contenu pour la capture vidéo desdits signaux vidéo.

3. Le système à contenu numérique selon la revendication 1, dans lequel lesdits services cryptographiques comprennent au moins un parmi le cryptage, le décryptage et la conversion de code.

4. Le système à contenu numérique selon la revendication 1, dans lequel ledit pont (110) est adapté pour recevoir une entrée de texte chiffré, pour réaliser le décryptage de ladite entrée de texte chiffré, et pour écrire une sortie de texte en clair, pour une destination.

5. Le système à contenu numérique selon la revendication 1, dans lequel ledit pont (110) est adapté pour recevoir une entrée de texte en clair, pour réaliser le cryptage de ladite entrée de texte en clair, et pour écrire une sortie de texte chiffré, pour une destination.

6. Le système à contenu numérique selon la revendication 1, dans lequel ledit pont (110) est adapté pour recevoir une entrée de texte chiffré dans un premier format de chiffrement, pour réaliser une conversion de code, et pour écrire ladite sortie de texte chiffré dans un second format de chiffrement pour une destination.

7. Le système à contenu numérique selon la revendication 1, dans lequel ledit pont (110) est adapté pour fournir ledit texte chiffré à une unité de traitement graphique (GPU) (140) couplé audit pont (110).
